(19) Europäisches Patentamt
European Patent Office
Office européen des brevets

(11) Publication number: **0 079 246**
**B1**

# (12) EUROPEAN PATENT SPECIFICATION

(45) Date of publication of patent specification: **25.01.89**

(51) Int. Cl.$^4$: **B 01 D 9/00,** B 01 D 9/02

(21) Application number: **82305986.0**

(22) Date of filing: **10.11.82**

(54) **Crystallizer.**

(30) Priority: **11.11.81 JP 179644/81**

(43) Date of publication of application:
**18.05.83 Bulletin 83/20**

(45) Publication of the grant of the patent:
**25.01.89 Bulletin 89/04**

(84) Designated Contracting States:
**DE FR GB IT SE**

(56) References cited:
**DE-A-1 619 754**
**DE-A-2 246 676**
**DE-A-2 856 223**

(73) Proprietor: **Solex Research Corporation of Japan**
**23-9, Maruyama-cho**
**Shibuya-ku Tokyo (JP)**

(72) Inventor: **Watanabe, Morio**
**8-23-22, Minamitsukaguchi-cho**
**Amagasaki-shi Hyogo-ken (JP)**
Inventor: **Nishimura, Sanji**
**13-8, Fukakusa Nanmei-cho Fushimi-ku**
**Kyoto-shi Kyoto-fu (JP)**
Inventor: **Watanabe, Nobuatsu**
**136, Uguisudai**
**Nagaokakyo-shi Kyoto-fu (JP)**

(74) Representative: **Gillam, Francis Cyril et al**
**SANDERSON & CO. European Patent Attorneys**
**34, East Stockwell Street**
**Colchester Essex CO1 1ST (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 079 246 B1

**Description**

The present invention relates to a crystallizer having a mixing tank in which an organic solvent containing ions of a metal may be mixed with an aqueous separating solution.

Crystallizers are known for crystallizing a metallic salt from its aqueous solution, by causing the crystals to precipitate on concentrating the solution by evaporation. In order to reduce the energy necessary for evaporation, such crystallizers often employ vacuum evaporation, and to increase the efficiency, the crystallizer may have multistage pressure reducing zones. Instead, the crystallizer may be arranged to cool the solution, to crystallize a substance having a large variation in solubility with temperature. In some instances, another salt may be added to the solution outside the crystallizer, to decrease the solubility of the required salt.

The use of a conventional crystallizer requires a large energy input as water must be evaporated to concentrate the required metallic salt, or another salt must be added to decrease the solubility of the required salt.

Other designs of crystalliser are known, where a chemical reaction is performed therewithin, which reaction results in crystals being precipitated out of a solution supplied to the crystallizer. One such reaction is a solvent extraction technique, in which metal ions are extracted into an organic solvent and are then taken out as a salt in a separating solution. When the separating solution is an aqueous solution in which the solubility of the required metallic salt is small, crystals of the salt tend to precipitate in a mixing tank wherein are mixed the separating solution and the organic solvent, the crystals adhering to the inner wall of the mixing tank, and if a stirrer is provided, on the wings thereof.

A crystallizer operating on the solvent extraction technique is disclosed in DE—A—22466676, but this crystallizer suffers from the disadvantage that it cannot be operated for long periods of time without servicing. This is because the agitation of the solutions within the mixing tank causes significant precipitation of crystals therewithin, such crystals then adhering to the walls of the mixing tank. Moreover, due to such agitation, the forming crystals are contacted with the organic solvent, which thus becomes consumed uneconomically due to the adhesion thereof to the crystals. Particularly, when operating with complex salts as metal-ammonium fluorides and metal-ammonium sulphates which are hardly soluble in water, these phenomena take place to a significant extent, preventing economic industrial utilization of this design of crystallizer.

In view of the problems mentioned above, known industrial crystallizers operating on solvent extraction principles usually use an aqueous solution in which the required metal ions are highly soluble; the process is operated by removing into the aqueous solution the metal ions from the organic solvent into which the ions have been extracted; thereafter a crystallizer is used for concentrating the solution by evaporation. Such a method is of course uneconomical in view of the high energy requirements.

It is an object of the present invention to offer an energy-saving crystallizer which is expressly configured to cause the transfer into an aqueous separating solution the ions of a metal extracted into an organic solvent, the metal ions being barely soluble in the separating solution whereby uniform crystals can be obtained with no need to evaporate the solution, and the consumption of the organic solvent being minimised by allowing crystal development apart from the organic solvent.

Accordingly, this invention provides a crystallizer comprising a crystallizer body having an upper part and a lower part the cross-section of which narrows from the body upper part down to the lower end of the body lower part, an open topped mixing tank disposed in the upper part to define a mixing zone for solvent containing ions to be crystallized and separating solution, and the lower part serving as a crystal-developing zone for crystals developing in the separating solution, there being a solvent discharge pipe to discharge solvent from the mixing zone, a crystal discharge pipe connected to the lower part, and liquid inlet arranged at or near the lower end of the lower part of the crystallizer body, which crystallizer is characterised by the provision of a pipe within the crystallizer body which pipe descends from the lower region of the open topped mixing tank into the lower part of the crystal-developing zone, and by a separating solution extraction pipe arranged to draw off separating solution from the region of the junction between the upper and lower parts of the crystallizer, and further by the provision of a recirculation system to recirculate drawn-off separating solution to both mixing tank and the liquid inlet.

The crystallizer of this invention allows a rapid and prompt separation of the organic solvent from the aqueous separating solution, by virtue of the said pipe leading the aqueous solution together with the metal ions away from the mixing tank. Agitation of the developing crystals is performed by the aqueous solution introduced into the inlet at the lower part of the body, so maintaining separate the developing crystals from the organic solvent.

Preferably, there is provided an organic solvent settling zone outside the mixing tank, to receive and allow settling of organic solvent overflowing from the mixing tank, there being a discharge pipe for organic solvent settling in the settling zone.

The separating solution extraction pipe allows the discharge of liquid from the crystallizer body for recirculation through the crystallizer. At least a portion of such extracted liquid may be reintroduced through the liquid inlet at the lower end of the lower part of the crystallizer body. By reintroducing the liquid, the crystals settling in the lower part of the crystallizer body may be fluidized, so as to agitate the crystals. Moreover, the temperature of the liquid in the crystallizer may be controlled by appropriate

adjustment of the temperature of the liquid being recirculated through said liquid inlet. Another portion of the extracted aqueous solution may be recirculated into the mixing tank itself.

The invention will now be described in greater detail, solely by way of illustration thereof, reference being made to the accompanying drawings which show a specific embodiment of crystallizer constructed and arranged in accordance with this invention and two modifications thereof. In the drawings:

Figure 1 is a longitudinal section of the embodiment of crystallizer of this invention;

Figures 2 and 3 respectively show front views of two modifications of the apparatus of this invention as shown in Figure 1; and

Figure 4 is a diagram showing the solubility of $(NH_4)_3FeF_6$ in water.

The embodiment of crystallizer of this invention will initially be explained with reference to Figure 1. An organic solvent 2 containing extracted ions of a metal (an organic phase) and an aqueous separating solution 3 are introduced into an open topped mixing tank 4 defining a mixing zone. The organic solvent is immiscible with water, and the separating solution contains a constituent capable of forming a barely-soluble salt with the metal ions extracted in the organic solvent. Then, the metal ions in the organic phase 2 are transferred into the separating solution due to the stirring effect obtained by a stirrer 14. The separating solution 3, in which the concentration of the metallic compound is increased, descends through a descending pipe 6 while the organic solvent separates therefrom due to the effect of the differences in specific gravity. During this, crystal nuclei of the compound form, the solution 3 then entering a crystal-developing zone 7. This zone has a general conical shape, apex down.

Organic solvents generally have a lesser density than water, and so the organic solvent is almost completely separated in the open topped mixing tank 4. Any solvent entering the crystal developing zone rises up and overflows therefrom into a settling zone 5, to accumulate above the separating solution in the crystal-developing zone 7, before being discharged through an organic solvent discharge pipe 11. Any organic solvent adhering to the crystals is removed when the crystals are developed in the crystal-developing zone 7, so freeing the crystals from the organic solvent. The separating solution flows upward through the crystal-developing zone 7 while precipitating and developing the crystals. Due to the increasing sectional area of the crystal-developing zone, the speed at which the separating medium ascends reduces to cause the crystals to precipitate and the crystals so-precipitated are almost perfectly separated in the region of the join between cylindrical part of the crystallizer and the lower conical part thereof—i.e. in the region of the crystal separating zone 13.

A portion of the separating solution is discharged from the crystallizer through a separating solution discharge pipe 10, though a portion is also drawn off by pump 9, through a ring pipe 17 and separating solution circulation pipe 16, for recirculation to the open topped mixing tank 4 as the separating solution 3. The solution can also be sent to a crystal-fluidizing medium inlet 8 provided at the bottom of the main crystallizer body 1 for accelerating the flow rate of the separating solution through the lower part of the crystal-developing zone 7, to prevent the sedimentation of crystals in that lower part. A lattice 15 is provided over the inlet 8. The crystals are discharged through a crystal discharge pipe 12 provided at an appropriate position in the conical portion of the crystal-developing zone 7, whereafter the crystals can be subjected to further treatments.

Figure 2 shows a front view of a modification of the apparatus shown in Figure 1. This modified embodiment is suitable for use when the solubility of the metallic compound to be crystallized in the aqueous separating solution is relatively large. It is possible to accelerate the precipitation of the crystals by cooling the separating medium coming out of the separating solution circulation pipe 16 by means of a cooler 17, so as to lower the temperature of the separating solution in the crystals developing zone 7. The other parts of the apparatus are the same as shown in Figure 1, and will not be described again.

Another modification of the apparatus is shown in Figure 3, where a heater 17 is provided to heat the separating medium leaving the separating solution circulation pipe 16, so as to prevent the crystals precipitating too much in the mixing zone 4 and in the descending pipe 6. Such an arrangement is suitable for a case where the solubility of the metallic compound to be crystallized is relatively small, unlike the case of Figure 2. The other parts of the apparatus are the same as shown in Figure 1, and will not be described again.

The cooler or the heater 17 may be cooled or heated respectively by using a coolant, or steam 18. As described above, in the crystallizer of the present invention, metal ions extracted into an organic solvent are transferred into an aqueous separating solution which contains a constituent capable of forming a barely-soluble salt with said metal ions for the crystallization thereof. There is no need to concentrate the separating solution by evaporation, the crystals so-produced are uniform, and the loss of organic solvent due to the adhesion thereof to the crystals is small. Thus, the apparatus can be operated quite economically.

The action of the apparatus of this invention will now be described in the following Examples methods performed in the apparatus.

Example 1

30% of $D_2EHPA$ (di-2-ethylhexyl phosphoric acid) as an extractant was diluted with 70% of normal paraffin to form an organic solvent, and the organic solvent containing 12.6 g/l of $Fe^{3+}$ ions was supplied to the mixing zone of the crystallizer shown in Figure 1 at a rate of 10 l/hr. Simultaneously, an aqueous $NH_4HF_2$

solution with a concentration of 100 g/l and containing 4.5 g/l of $(NH_4)_3FeF_6$ was also supplied as an aqueous separating solution to the mixing zone of the crystallizer, at a rate of 20 l/hr. $Fe^{3+}$ ions in the organic phase were transferred to the aqueous phase forming the precipitates of a complex salt, $(NH_4)_3FeF_6$, according to the reaction:

$$R_3Fe+3NH_4HF_2 \rightleftarrows 3R\cdot H+(NH_4)_3FeF_6 \qquad (1)$$

where $R\cdot H$ represents an extractant in the organic solvent, and $R_3Fe$ represents $Fe^{3+}$ ions extracted in the organic solvent.

In a conventional mixer-settler type apparatus, the crystals obtained adhered on the wall of the mixing tank to a thickness of about 30 mm and on the wings of the stirrer to such an extent that the wings of the turbine could not be seen perfectly after 3 hours' operation. Moreover, the $Fe^{3+}$ ions in the organic solvent could not be transferred to the aqueous phase after 5 hours' operation. The sizes of the crystals obtained were in the range of 2 to 10 μ.

By contrast to this, after 120 hours' operation in the apparatus of the present invention, while some crystals did adhere on the wings of the stirrer to a thickness of only 0.5 to 1 mm, there was no adhesion thereof on the wall of the mixing zone. The process of separating the organic solvent in the course of forming the crystal nuclei in the crystal-developing zone could distinctly be observed with the naked eye. The crystals discharged were uniform, with sizes in the range of 50 to 70 μ. Other properties of the crystals obtained in both instances were as shown in Table 1.

TABLE 1

| Crystals formed | Organic solvent content (wt.%) | Water content (wt.%) | Separation rate (%) |
|---|---|---|---|
| In a conventional mixer | 4.2 | 62 | 81 |
| In the apparatus of this invention | 0.081 | 28 | 96 |

The solubility of $(NH_4)_3FeF_6$ in an aqueous $NH_4HF_2$ solution (HF=0 g/l) is small, as shown in Figure 4, so that said solution can separate $Fe^{3+}$ ions from the organic phase and crystallize the ions as $(NH_4)_3FeF_6$ therein, with no need for evaporation. The crystals obtained by utilizing the apparatus of this invention contain only a small amount of the organic solvent, as shown in Table 1.

Example 2

10% of TOA (trioctylamine) as an extractant was diluted with 90% of an aromatic hydrocarbon to form an organic solvent, and the organic solvent containing 6 g/l of $VO_3^-$ ions was supplied to the mixing zone of the crystallizer at a rate of 10 l/hr. Simultaneously, an aqueous $NH_4Cl$ solution with a concentration of 4 mols/l and a pH of 8 was also supplied as an aqueous separating solution to the mixing zone at a rate of 10 l/hr. Due to the mixing of the two solutions, a reaction took place, as shown in equation (2), for separating $VO_3^-$ ions in the organic phase into the aqueous phase, to form crystals of ammonium vanadate, $NH_4VO_3$.

$$(R_3NH^+)VO_3^-+NH_4Cl \rightleftarrows (R_3NH^+)Cl^-+NH_4VO_3\downarrow \qquad (2)$$

In a conventional mixer-settler type apparatus, the crystals obtained adhered on the wall of the mixing tank and on the wings of the stirrer, and the operation became impossible after 30 hours. The crystals obtained were fine and clayish, with a diameter of less than 20 μ and contained a large amount of the organic solvent. It was necessary to redissolve and recrystallize.

By contrast to this, using the apparatus of this invention, operation could be performed continuously for a long time, and the crystals obtained were 100 to 150 μ in diameter.

The results of the operation in the two apparati are compared in Table 2.

TABLE 2

| Apparatus | Organic solvent content (wt.%) | Size of the crystals (μ) | Water content (wt.%) | Separation rate (%) |
|---|---|---|---|---|
| Conventional (mixer-settler type) | 14.8 | 0.5—20 | 72 | 98—98.5 |
| Apparatus of this invention | 0.03 | 100—150 | 31 | 99—100 |

It could be ascertained by the naked eye that the crystals obtained by the apparatus of the present invention had a transparency much higher than that of the crystals obtained by the conventional mixer-settler type apparatus, so proving that the amount of organic solvent adhering on the crystals was very small as compared to the case of the conventional method.

When using the crystallizer of this invention, it is possible to use an aqueous solution, in which the solubility of the metallic salt concerned is small, as a separating solution, the metal ions in an organic solvent being transferred thereto. Therefore, it is possible to obtain the crystals with no need to concentrate the separating solution by evaporation.

**Claims**

1. A crystallizer comprising a crystallizer body having an upper part and a lower part the cross-section of which narrows from the body upper part down to the lower end of the body lower part, an open topped mixing tank (4) disposed in the upper part to define a mixing zone for solvent containing ions to be crystallized and separating solution, and the lower part serving as a crystal-developing zone (7) for crystals developing in the separating solution, there being a solvent discharge pipe (11) to discharge solvent from the mixing zone and a crystal discharge pipe (12) connected to the lower part, and a liquid inlet (8) arranged at or near the lower end of the lower part of the crystallizer body, characterised in that a pipe (6) is provided within the crystallizer body which pipe (6) descends from the lower region of the open topped mixing tank (4) into the lower part of the crystal-developing zone (7), in that there is a separating solution extraction pipe (16) arranged to draw off separating solution from the region of the junction between the upper and lower parts of the crystallizer, and in that there is a recirculation system (9) to recirculate drawn-off separating solution to both the mixing tank (4) and the liquid inlet (8).

2. A crystallizer according to claim 1, further characterised in that the upper part defines a settling zone (5) provided outside the mixing tank (4) to receive liquid overflowing from the mixing tank, and a discharge pipe (11) for liquid from the settling zone.

3. A crystallizer according to claim 2, characterised in that the settling zone (5) is defined by a portion of the upper part of the crystalliser body (1) which surrounds the mixing tank (4).

4. A crystallizer according to any of the preceding claims, characterised in that the upper part of the crystalliser body (1) has a substantially constant cross-section, the cross-section of the lower part reducing from its junction with the upper part towards its lower end.

5. A crystallizer according to any of the preceding claims, further characterised in that a ring pipe (17) is provided to surround the lower end of the mixing tank, the separating solution extraction pipe (6) being connected to the ring pipe to draw off solution through the ring pipe.

6. A crystallizer according to any of the preceding claims, characterised in that means (17) are provided to adjust the temperature of the liquid introduced into the liquid inlet (8) at the lower end of the lower part of the crystallizer body (1).

7. A crystallizer according to any of the preceding claims, characterised in that the liquid inlet (8) at the lower end of the lower part of the crystallizer body (1) is arranged as a crystal fluidizing inlet whereby the crystals developing in the crystal-developing zone are agitated and fluidized by liquid introduced through said liquid inlet.

**Patentansprüche**

1. Kristallisator mit einem Kristallisatorkörper, der einen oberen Abschnitt und einen unteren Abschnitt aufweist, wobei der Querschnitt des unteren Abschnitts sich vom oberen Körperabschnitt zum unteren Ende des unteren Körperabschnitts verengt, einem eben offenen Mischtank (4), der in dem oberen Abschnitt angeordnet ist, zum Bestimmen einer Mischzone für ein zu kristallisierende Ionen enthaltendendes Lösungsmittel und eine Trennlösung, und wobei der untere Abschnitt als eine Kristallentwicklungszone (7) zur Entwicklung von Kristallen in der Trennlösung dient, und mit einem Lösungsmittel - Abflußrohr (11) zum Abgeben von Lösungsmittel aus der Mischzone und einem Kristall - Abflußrohr (12), das mit dem unteren Abschnitt verbunden ist, und einem am oder in der Nähe des unteren Endes des unteren Abschnitts des Kristallisatorkörpers angeordneten Flüssigkeitseinlaß (8), dadurch gekennzeichnet,

daß ein Rohr (6) innerhalb des Kristallisatorkörpers angeordnet ist, das von dem unteren Bereich des oben offenen Mischtanks (4) in den unteren Abschnitt der Kristallentwicklungszone (7) reicht, daß ein Trennlösung - Entnahmerohr (16) angeordnet ist zum Abnehmen von Trennlösung aus dem Bereich der Verbindung zwischen dem oberen und dem unteren Abschnitt des Kristallisators, und daß ein Rezirkulationssystem (9) vorgesehen ist zum Rezirkulieren der abgenommenen Trennlösung zum Mischtank (4) und zum Flüssigkeitseinlaß (8).

2. Kristallisator nach Anspruch 1, ferner dadurch gekennzeichnet, daß der obere Abschnitt eine außerhalb des Mischtanks (4) angeordnete Absetzzone (5) bildet zum Aufnehmen von aus dem Mischtank überfließender Flüssigkeit und ein Abflußrohr (11) für Flüssigkeit aus der Absetzzone aufweist.

3. Kristallisator nach Anspruch 2, dadurch gekennzeichnet, daß die Absetzzone (5) gebildet wird durch einen Bereich des oberen Abschnitts des Kristallisatorkörpers (1), der den Mischtank (4) umgibt.

4. Kristallisator nach einem der vorstehenden Ansprüche, dadurch gekennzeichnet, daß der obere Abschnitt des Kristallisatorkörpers (1) einen im wesentlichen konstanten Querschnitt aufweist, wobei der Querschnitt des unteren Abschnitts sich von seiner Verbindung mit dem oberen Abschnitt zu seinem unteren Ende verringert.

5. Kristallisator nach einem der vorstehenden Ansprüche, ferner dadurch gekennzeichnet, daß ein Ringrohr (17) so angeordnet ist, daß es das untere Ende des Mischtanks umgibt, wobei das Trennlösung - Entnahmerohr (6) zum Abnehmen vom Lösung durch das Ringrohr mit dem Ringrohr verbunden ist.

6. Kristallisator nach einem der vorstehenden Ansprüche, dadurch gekennzeichnet, daß Einrichtungen (17) vorgesehen sind zum Einstellen der Temperatur der Flüssigkeit, die dem Flüssigkeitseinlaß (8) am unteren Ende des unteren Abschnitts des Kristallisatorkörpers (1) zugeführt wird.

7. Kristallisator nach einem der vorstehenden Ansprüche, dadurch gekennzeichnet, daß der Flüssigkeitseinlaß (8) am unteren Ende des unteren Abschnitts des Kristallisatorkörpers (1) als Kristall - Verflüssigungseinlaß angeordnet ist, wobei die in der Kristallentwicklungszone entstehenden Kristalle gerührt werden und durch die durch den Flüssigkeitseinlaß zugeführte Flüssigkeit verflüssigt werden.

**Revendications**

1. Cristallisoir comprenant un corps de cristallisoir ayant une partie supérieure et une partie inférieure, dont la section transversale va en se rétrécissant entre la partie supérieur du corps et l'extrémité inférieure de la partie inférieure du corps, un réservoir de mélange (4) au sommet ouvert disposé dans la partie supérieure afin de définir une zone de mélange pour un solvant contenant des ions devant être cristallisés et une solution de séparation, et la partie inférieure servant de zone de développement de cristaux (7) pour le développement de cristaux dans la solution de séparation, une conduite de décharge de solvant (11) servant à décharger le solvant à partir de la zone de mélange et une conduite (12) de décharge de cristaux étant connectée à la partie inférieure, et un orifice (8) d'entrée de liquide disposé au droit ou à proximité de l'extrémité inférieure de la partie inférieure du corps du cristallisoir, caractérisé en ce qu'une conduite (6) est montée à l'intérieur du corps du cristallisoir, conduite (6) qui descend à partir de la zone inférieure du réservoir de mélange (4) au sommet ouvert jusque dans la partie inférieure de la zone de développement de cristaux (7), en ce qu'il y a une conduite (16) d'extraction de solution de séparation disposée de manière à soutirer la solution de séparation de la zone de la jonction entre les parties supérieure et inférieure du cristallisoīr, et en ce qu'il y a un système de remise en circulation (9) de façon à remettre en circulation la solution de séparation soutirée vers le réservoir de mélange (4) et l'orifice (8) d'entrée de liquide.

2. Cristallisoir selon la revendication 1, caractérisé en outre en ce que la partie supérieure définit une zone de dépôt (5) prévue à l'extérieur dù réservoir de mélange (4) de manière à recevoir le trop-plein de liquide provenant du réservoir de mélange, et une conduite de décharge (11) pour le liquide provenant de la zone de dépôt.

3. Cristallisoir selon la revendication 2, caractérisé en ce que la zone de dépôt (5) est définie par une portion de la partie supérieure du corps (1) du cristallisoir qui entoure le réservoir de mélange (4).

4. Cristallisoir selon l'une quelconque des revendications précédentes, caractérisé en ce que la partie supérieure du corps (1) du cristallisoir a une section transversale sensiblement constante, la section transversale de la partie inférieure allant en diminuant entre sa jonction avec la partie supérieure et son extrémité inférieure.

5. Cristallisoir selon l'une quelconque des revendications précédentes, caractérisé en outre en ce qu'une conduite annulaire (17) est montée de manière à entourer l'extrémité inférieure du réservoir de mélange, la conduite (6) d'extraction de la solution de séparation étant connectée à la conduite circulaire pour soutirer la solution par l'intermédiaire de la conduite circulaire.

6. Cristallisoir selon l'une quelconque des revendications précédentes, caractérisé en ce que des moyens (17) sont prévus pour ajuster la température du liquide introduit dans l'orifice (8) d'entrée de liquide à l'extrémité inférieure de la partie inférieure du corps (1) du cristallisoir.

7. Cristallisoir selon l'une quelconque des revendications précédentes, caractérisé en ce que l'orifice (8) d'entrée de liquide à l'extrémité inférieure de la partie inférieure du corps (1) du cristallisoir est agencé en orifice d'entrée pour fluidisation des cristaux, d'où il résulte que les cristaux se développant dans la zone de développement des cristaux sont agités et fluidisés par le liquide introduit par l'intermédiaire de l'orifice d'entrée de liquide.

FIG.1

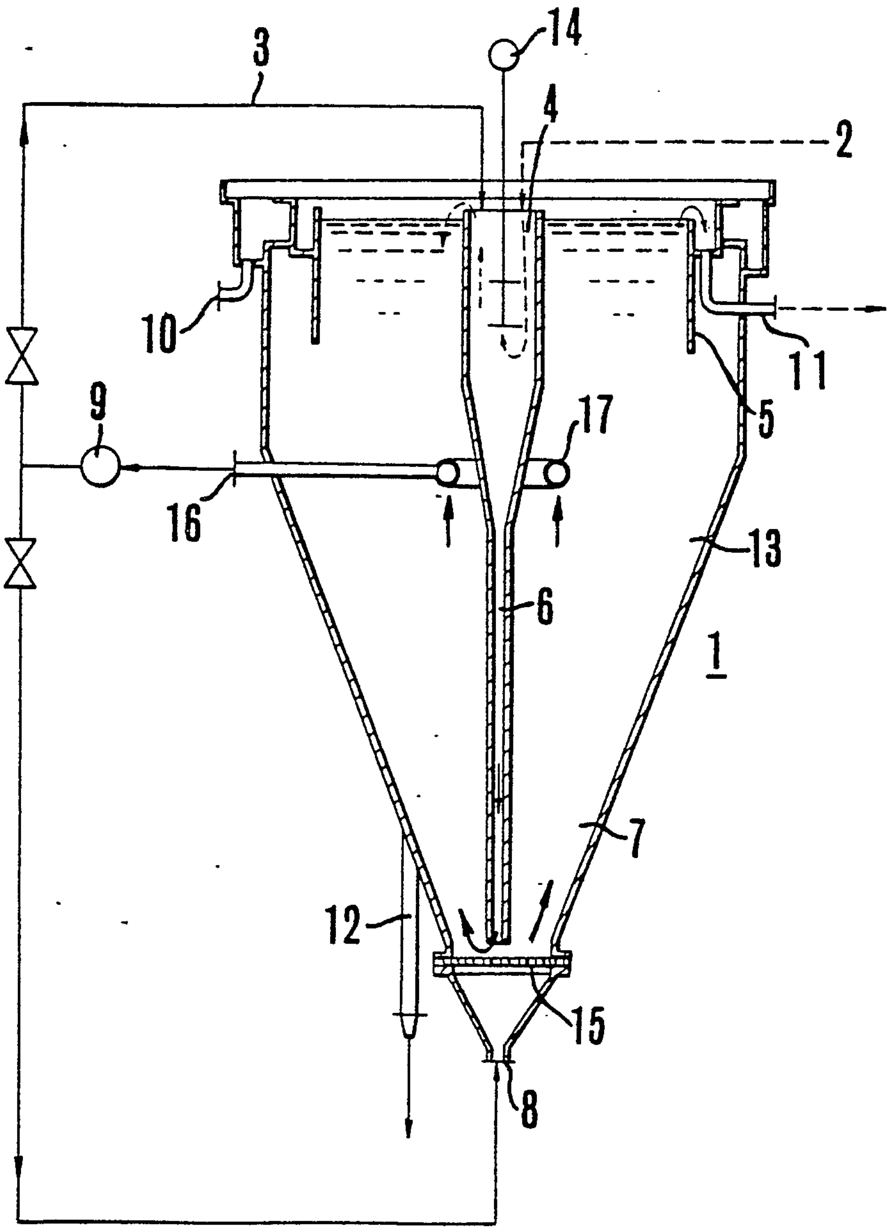

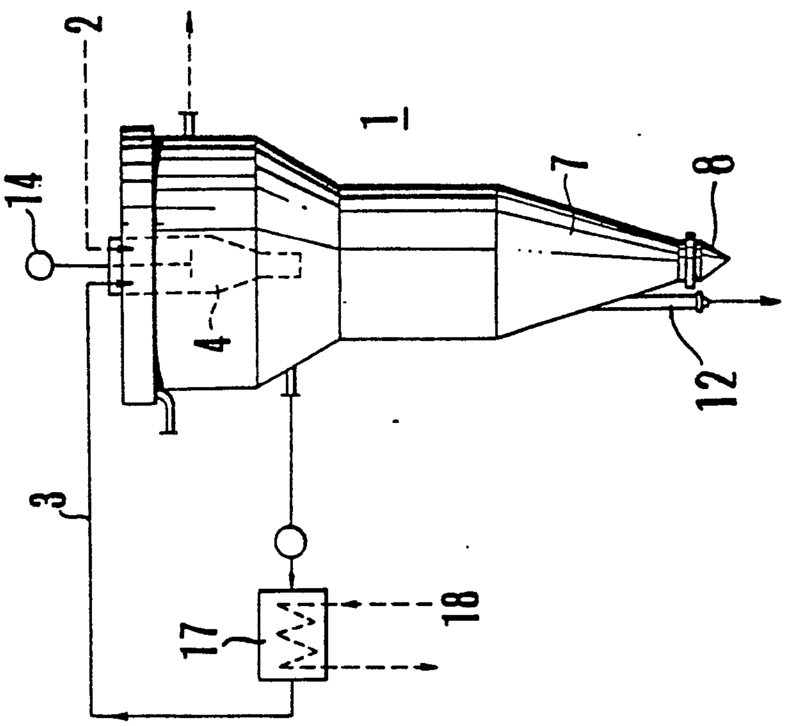


FIG.3

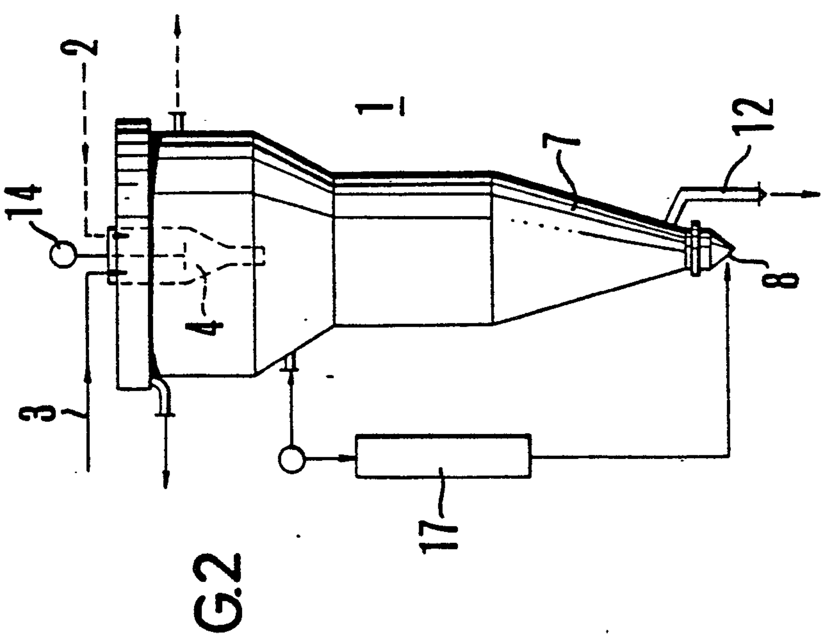


FIG.2

FIG.4

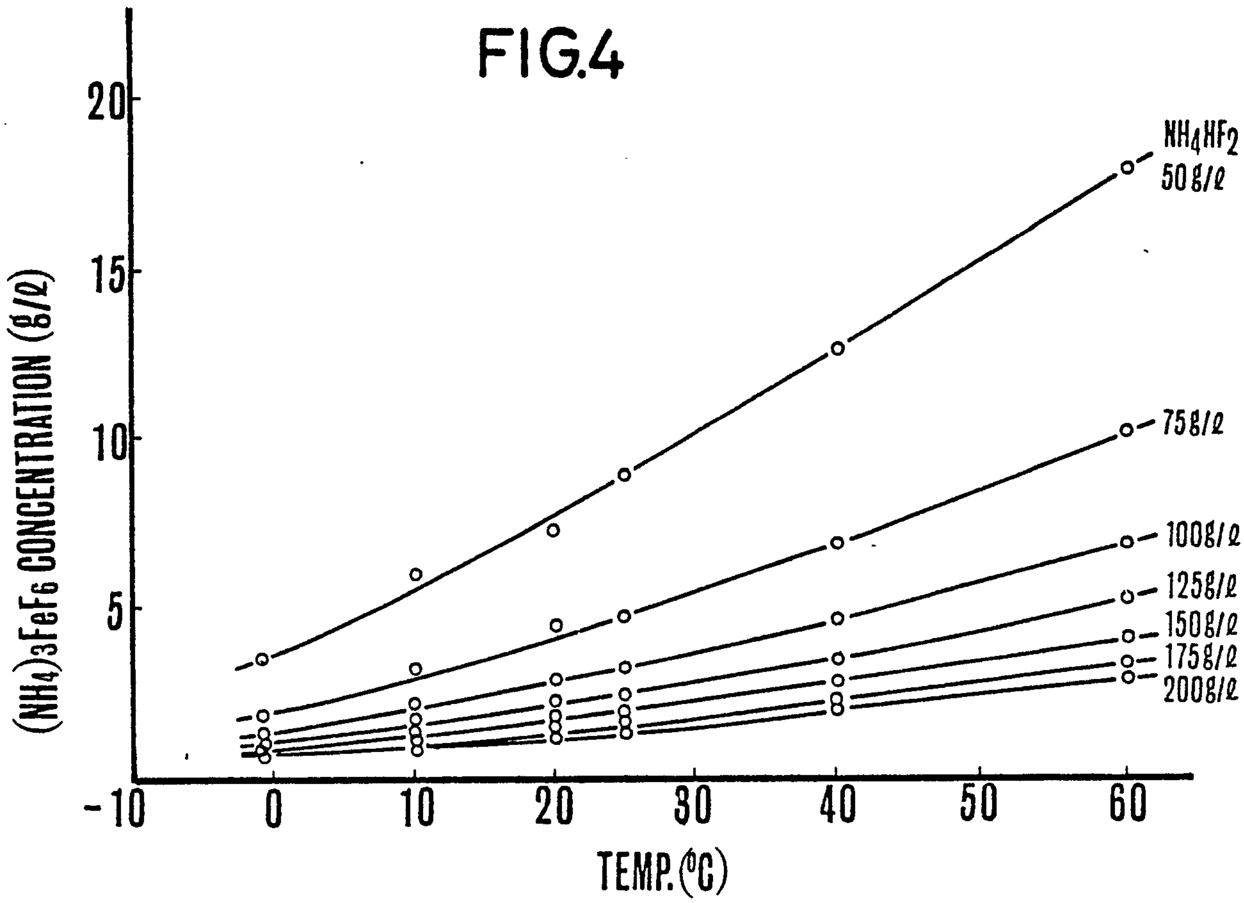

20
15
10
5
-10
0
10
20
30
40
50
60
TEMP.(°C)
$(NH_4)_3FeF_6$ CONCENTRATION (g/l)
$NH_4HF_2$ 50g/l
75g/l
100g/l
125g/l
150g/l
175g/l
200g/l